# EUROPEAN PATENT SPECIFICATION

(11) **EP 3 464 212 B1**
(45) Date of publication and mention of the grant of the patent: **02.12.2026**
(21) Application number: 17801857.8
(22) Date of filing: 23.05.2017
(51) Int. Cl.: C04B 28/04, C04B 14/24, C04B 7/13

(54) **LIGHTWEIGHT CONCRETE FORMULATIONS**
LEICHTE BETONZUSAMMENSETZUNGEN
FORMULATIONS DE BÉTON LÉGER

(30) Priority: 24.05.2016 US 201662340801 P
(43) Date of publication of application: 10.04.2019
(73) Proprietor: 2581776 Ontario Inc., Etobicoke, Ontario M8Z 4X6 (CA)
(72) Inventor: CALVIN, Chris, Bradfor, Ontario L3Z 0B3 (CA); BOEHLER, Matthew, Markham, Ontario L3S 3B2 (CA)
(74) Representative: Bridle, Andrew Barry
(86) International application number: PCT/CA2017/000130
(87) International publication number: WO 2017/201607

(56) References cited:
- COTA, F. P. ET AL.: "Mechanical properties and ASR evaluation of concrete tiles with waste glass aggregate", SUSTAINABLE CITIES AND SOCIETY, vol. 16, August 2015 (2015-08-01), pages 49 - 56, XP055445089
- PANZERA, T. H. ET AL.: "Recycled glass as potential aggregate for concrete tiles: a statistical analysis of the physical and engineering properties", INTERNATIONAL JOURNAL ENVIRONMENTAL AND WASTE MANAGEMENT, vol. 12, no. 3, 2013, pages 280 - 299, XP055583311, ISSN: 1478-9876, DOI: 10.1504/IJEWM.2013.056196
- ANONYMOUS: "Metapor - the active additive and binder substitute", 1 September 2015 (2015-09-01), pages 1 - 3, XP055583320, Retrieved from the Internet <URL:https://www.poraver.com/en/metapor/> [retrieved on 20171107]

## Description

### FIELD OF THE INVENTION

The present invention relates generally to concrete formulations, and more particularly to lightweight concrete formulations containing glass.

### BACKGROUND OF THE INVENTION

People have tried for several decades to use glass as a component of concrete. However, no such formulations have found significant commercial success even though many combinations of components in various proportions have been made and tested. One issue is that the Alkali Silica Reaction (ASR) causes concrete containing glass to deteriorate over time unless suitable measures are taken to reduce the effect of ASR. While many such measures have been proposed, formulations that are ASR-resistant while still providing high compressive strength have not been disclosed or commercially exploited. COTA, F. P. et al.: "Mechanical properties and ASR evaluation of concrete tiles with waste glass aggregate",Sustainable Cities and Society, vol. 16, August 2015 (2015-08), pages 49-56, discloses a formulation comprising portland cement and quartz particles wherein quartz particles are partially replaced by glass particles and the portland cement is partially replaced by metakaolin.

### SUMMARY OF THE INVENTION

The invention provides a lightweight concrete formulation containing Portland cement, aggregate, glass particles, water and metakaolin as defined in the claims appended hereto. A concrete formulation comprising Portland cement, aggregate, glass particles, water and metakaolin, wherein at least 80% of the glass particles have a grain size of less than 4 mm, the glass particles contribute between 3% and 20% of the total weight of the concrete formulation, and the metakaolin contributes between 6% and 12% of the total weight of the concrete formulation. The glass particles are preferably expanded glass particles.

Preferably at least 80% of the glass particles have a grain size of 1 mm or less. More preferably, at least 80% of the glass particles have a grain size of 0.5 mm or less. At least 80% of the glass particles may have a grain size of 0.25 mm or greater.

The glass particles contribute between 6% and 15% of the total weight of the concrete formulation. The glass particles may contribute at least 12% of the total weight of the concrete formulation.

The metakaolin may contribute between 8% and 10% of the total weight of the concrete formulation.

The glass particles may contribute between 12% and 15% of the total weight of the concrete formulation.

The Portland cement may contribute between 30% and 38% of the total weight of the concrete formulation, where the aggregate contributes between 16% and 24% of the total weight of the concrete formulation, and the metakaolin contributes between 6% and 12% of the total weight of the concrete formulation.

The Portland cement may contribute between 32% and 36% of the total weight of the concrete formulation, where the aggregate contributes between 19% and 23% of the total weight of the concrete formulation, and the metakaolin contributes between 8% and 10% of the total weight of the concrete formulation.

The concrete formulation may include sand. The Portland cement may contribute between 21% and 25% of the total weight of the concrete formulation where the aggregate contributes between 18% and 22% of the total weight of the concrete formulation, the sand contributes between 25% and 29% of the total weight of the concrete formulation, the glass particles contribute between 5% and 7% of the total weight of the concrete formulation, and the metakaolin contributes between 6% and 8% of the total weight of the concrete formulation.

The metakaolin is preferably Metapor^{®}.

### DETAILED DESCRIPTION OF THE INVENTION

The invention provides formulations, or mixes, of shotcrete that provide excellent compressive strength and ASR resistance.

A mix design for a conventional form of concrete for use as shotcrete is shown below. The amounts shown are designed to produce a cubic metre of shotcrete.

| **Component** | **Weight (kg)** | **Weight %** |
|---|---|---|
| Portland cement | 449 | 19.4% |
| Aggregate | 430 | 18.6% |
| Sand | 1263 | 54.7% |
| Water | 169 | 7.3% |
| **Total** | **2311** | **100%** |

In preferred lightweight shotcrete mixes according to the invention, some or all of the sand may be replaced with glass. For example, in one mix, half of the sand (631.5 kg) in the above standard mix may be replaced by 158 kg of glass. The preferred form of glass is expanded glass particles having grain sizes less than 4 mm (ASTM C135 mesh no. 5 or less), preferably less than 2 mm (ASTM C135 mesh no. 10 or less) or 1 mm (ASTM C135 mesh no. 18 or less) and most preferably less than 0.5 mm (ASTM C135 mesh no. 35 or less) or less than 0.3 mm (ASTM C135 mesh no. 50 or less). Such glass particles may be made from recycled glass that is finely ground, mixed and formed to granules, which are sintered and expanded in a rotary kiln. This process creates lightweight spheres with a fine closed cellular pore structure. A preferred product is Poraver^{®} expanded glass beads with grain sizes from 0.04 mm to 4 mm. The preferred Poraver product has a grain size of 0.25-0.5 mm, mesh no. 60-35 and a fineness modulus of about 1.92. Alternatively, a Poraver product having a grain size or 0.1-0.3 mm, mesh no. 140-50 and a fineness modulus of about 0.66 may be used. These products have 10% or less oversize particles and I5% or less undersize particles. Generally herein when referring to a maximum particle grain size, it is meant that at least 80% of the particles do not have a larger grain size and preferably at least 90% of the particles do not have a larger grain size. Most preferably 100% of the particles do not have a larger grain size.

The use of such fine expanded glass particles reduces ASR so that ASR-related damage is less likely to occur.

In example mixes, a strengthening/hardening and stabilizing agent in the form of metakaolin is also added. The metakaolin is a dehydroxylated form of the clay mineral kaolinite. Metakaolin further reduces the deterioration of concrete by ASR. Metakaolin is a pozzolan. Testing has shown that the use of metakaolin provides better results than other pozzolans that have been tried. Metakaolin is added to contribute about 6% to 12% of the weight of a mix, or more preferably 6% to 10% or 8% to 12%. A preferred form of metakaolin is Metapor^{®}, which is metakaolin with small amounts of fine expanded glass produced by Poraver as a byproduct of the production of expanded glass beads. As such, Metapor is relatively inexpensive.

Two preferred shotcrete mixes are shown below.

| **Component** | **Shotcrete Mix 1** | | **Shotcrete Mix 2** | |
|---|---|---|---|---|
| | **Weight (kg)** | **Weight %** | **Weight (kg)** | **Weight %** |
| Portland cement | 10.5 | 35.1% | 8.75 | 27.0% |
| Aggregate | 5.6 | 18.7% | 5.5 | 16.9% |
| Sand | 0 | 0 | 8.0 | 24.7% |
| Glass | 4.0 | 13.4% | 2.0 | 6.2% |
| Water | 7.4 | 24.7% | 6.0 | 18.5% |
| Metapor | 2.4 | 8.0% | 2.2 | 6.8% |
| **Total** | **29.9** | **100%** | **32.45** | **100%** |

A mix similar to Shotcrete Mix 1 was tested for compressive strength starting on May 5, 2016 according to the standard CSA A23.2-3C and -9C. Six cylinders were formed with an average density of 1561 kg/m³ with a standard deviation of 6.7 kg/m³. The shotcrete temperature was 18°C and the air temperature was 15 °C. The initial 24 hour curing temperature was between 20°C and 25°C. The compressive strength was measured as 21.6 MPa (2 days), 23.2 MPa (5 days), and 23.3 MPa (7 days).

Shotcrete Mix 2 was tested for compressive strength starting on May 5, 2016 according to the standard CSA A23.2-3C and -9C. Six cylinders were formed with an average density of 1913 kg/m³ with a standard deviation of 7.0 kg/m³. The shotcrete temperature was 16.5°C and the air temperature was 15°C. The initial 24 hour curing temperature was between 20°C and 25°C. The compressive strength was measured as 24.8 MPa (2 days), 26.3 MPa (5 days), and 28.4 MPa (7 days).

Experimentation and testing has shown that Shotcrete Mix 1 and Shotcrete Mix 2 produce concrete with high compressive strength relative to other concrete formulations containing glass, and it is believed that the formulation using ASR-resistant expanded glass in combination with metakaolin, preferably in the form of Metapor^{®}, in the proportions disclosed herein will reduce or prevent ASR-related damage. Several other mixes using different amounts of glass particles and Metapor and other components were made and tested. In several cases where 50% of the sand was replaced by glass, as in Shotcrete Mix 2, such other mixes produced concrete with compression strengths below 20 MPa. When using no sand, as in Shotcrete Mix 1, some such other mixes produced concrete with compression strengths below 10 MPa.

Two additional preferred shotcrete mixes are shown below.

| **Component** | **Shotcrete Mix 3** | | **Shotcrete Mix 4** | |
|---|---|---|---|---|
| | **Weight (kg)** | **Weight %** | **Weight (kg)** | **Weight %** |
| Portland cement | 680 | 33.6% | 464 | 22.4% |
| Aggregate | 420 | 20.8% | 420 | 20.3% |
| Sand | | | 550 | 26.6% |
| Glass | 270 | 13.4% | 137.5 | 6.6% |
| Water | 461 | 22.8% | 326.5 | 15.8% |
| Metapor | 190 | 9.4% | 170 | 8.2% |
| **Total** | **2021** | | **2068** | |

Weights and weight percentages of glass as used herein are for dry glass. The glass does in fact absorb some of the water. For example, in shotcrete mix 3, about 100 kg of the water is typically absorbed by the glass. In general, in all mixes discussed herein, the amount of water required will vary based on various factors, such as the environment (e.g. the relative humidity) and the water content of the sand in mixes employing sand.

Shotcrete Mix 3 was tested for compressive strength starting on December 14, 2016 by exp Services Inc. of Brampton, Ontario, Canada. The shotcrete temperature was 16°C and the air temperature was -2°C with a relative humidity of 8.5%. 101.5 mm diameter cylinders were tested. The following results were measured.

| **Duration (days)** | **Mass (kg/m³)** | **Strength (MPa)** |
|---|---|---|
| 1 | 1662 | 23.7 |
| 1 | 1656 | 23.3 |
| 3 | 1644 | 27.8 |
| 3 | 1662 | 27.8 |
| 7 | 1644 | 37.5 |
| 7 | 1656 | 28.4 |
| 7 | 1668 | 37.0 |
| 7 | 1662 | 28.9 |
| 28 | 1650 | 32.5 |
| 28 | 1662 | 30.1 |

Shotcrete Mix 4 was tested for compressive strength starting on February 16, 2017 by exp Services Inc. of Brampton, Ontario, Canada. The shotcrete temperature was 21.5°C and the air temperature was 20°C with a relative humidity of 8.0%. 101.5 mm diameter cylinders were tested. The following results were measured.

| **Duration (days)** | **Mass (kg/m³)** | **Strength (MPa)** |
|---|---|---|
| 1 | 1826 | 0.2 |
| 1 | 1851 | 10.8 |
| 1 | 1826 | 10.9 |
| 3 | 1845 | 26.3 |
| 3 | 1826 | 26.7 |
| 6 | 1851 | 32.7 |
| 6 | 1833 | 34.0 |
| 7 | 1826 | 32.2 |
| 7 | 1833 | 33.0 |

In general, a water/cement ratio of 0.35 to 0.45 is preferred. The water/cement ratio is calculated as the amount of water, excluding the water absorbed by the glass, divided by the sum of the amount of Portland and metapor. So for Shotcrete Mix 3, for example, the water cement ratio is 0.41.

In this document, references to "mix", "formulation" and "composition" mean the same thing, and refer to a particular mixture of component ingredients.

The abbreviation mm as used herein refers to millimetres (or in the US, "millimeters"). The abbreviation m as used herein refers to metres (or in the US, "meters"). The abbreviation kg as used herein refers to kilograms. The abbreviation MPa as used herein refers to megapascals.

It should be understood that the above-described embodiments of the present invention, particularly, any "preferred" embodiments, are only examples of implementations, merely set forth for a clear understanding of the principles of the invention. Many variations and modifications may be made to the above-described embodiment(s) of the invention as will be evident to those skilled in the art. That is, persons skilled in the art will appreciate and understand that such modifications and variations are, or will be, possible to utilize and carry out the teachings of the invention described herein.

Where, in this document, a list of one or more items is prefaced by the expression "such as" or "including", is followed by the abbreviation "etc.", or is prefaced or followed by the expression "for example", or "e.g.", this is done to expressly convey and emphasize that the list is not exhaustive, irrespective of the length of the list. The absence of such an expression, or another similar expression, is in no way intended to imply that a list is exhaustive. Unless otherwise expressly stated or clearly implied, such lists shall be read to include all comparable or equivalent variations of the listed item(s), and alternatives to the item(s), in the list that a skilled person would understand would be suitable for the purpose that the one or more items are listed.

The words "comprises" and "comprising", when used in this specification and the claims, are used to specify the presence of stated features, elements, integers, steps or components, and do not preclude, nor imply the necessity for, the presence or addition of one or more other features, elements, integers, steps, components or groups thereof.

The scope of the claims that follow is not limited by the embodiments set forth in the description. The claims should be given the broadest purposive construction consistent with the description and figures as a whole.

## Claims

1. A concrete formulation comprising Portland cement, aggregate, glass particles, water and metakaolin, wherein at least 80% of the glass particles have a grain size of less than 4 mm, the glass particles contribute between 3% and 20% of the total weight of the concrete formulation, and the metakaolin contributes between 6% and 12% of the total weight of the concrete formulation.

2. The concrete formulation of Claim 1, wherein the glass particles are expanded glass particles.

3. The concrete formulation of Claim 1, wherein at least 80% of the glass particles have a grain size of 2 mm or less, optionally 1mm or less, optionally 0.5mm or less.

4. The concrete formulation of any one of Claims 1-3, wherein at least 80% of the glass particles have a grain size of 0.25 mm or greater.

5. The concrete formulation of Claim 1, wherein the glass particles contribute between 6% and 15% of the total weight of the concrete formulation.

6. The concrete formulation of Claim 1, wherein the glass particles contribute at least 12% of the total weight of the concrete formulation, optionally between 12% and 15% of the total weight of the concrete formulation.

7. The concrete formulation of Claim 1, wherein the metakaolin contributes between 8% and 10% of the total weight of the concrete formulation.

8. The concrete formulation of Claim 1, wherein the Portland cement contributes between 30% and 38% of the total weight of the concrete formulation, the aggregate contributes between 16% and 24% of the total weight of the concrete formulation.

9. The concrete formulation of Claim 8, wherein the Portland cement contributes between 32% and 36% of the total weight of the concrete formulation, the aggregate contributes between 19% and 23% of the total weight of the concrete formulation, and the metakaolin contributes between 8% and 10% of the total weight of the concrete formulation.

10. The concrete formulation of claim 2 further comprising sand, wherein at least 80% of the glass particles have a grain size of less than 1 mm.

11. The concrete formulation of claim 10, wherein the Portland cement contributes between 21% and 25% of the total weight of the concrete formulation, the aggregate contributes between 18% and 22% of the total weight of the concrete formulation, the sand contributes between 25% and 29% of the total weight of the concrete formulation, the glass particles contribute between 5% and 7% of the total weight of the concrete formulation, and the metakaolin contributes between 8% and 10% of the total weight of the concrete formulation.

## Patentansprüche

1. Betonzusammensetzung, umfassend Portlandzement, Zuschlagstoff, Glaspartikel, Wasser und Metakaolin, wobei mindestens 80 % der Glaspartikel eine Korngröße von weniger als 4 mm aufweisen, die Glaspartikel zwischen 3 % und 20 % des Gesamtgewichts der Betonzusammensetzung ausmachen und das Metakaolin zwischen 6 % und 12 % des Gesamtgewichts der Betonzusammensetzung ausmacht.

2. Betonzusammensetzung nach Anspruch 1, wobei die Glaspartikel expandierte Glaspartikel sind.

3. Betonzusammensetzung nach Anspruch 1, wobei mindestens 80 % der Glaspartikel eine Korngröße von 2 mm oder weniger, optional 1 mm oder weniger, optional 0,5 mm oder weniger aufweisen.

4. Betonzusammensetzung nach einem der Ansprüche 1-3, wobei mindestens 80 % der Glaspartikel eine Korngröße von 0,25 mm oder mehr aufweisen.

5. Betonzusammensetzung nach Anspruch 1, wobei die Glaspartikel zwischen 6 % und 15 % des Gesamtgewichts der Betonzusammensetzung ausmachen.

6. Betonzusammensetzung nach Anspruch 1, wobei die Glaspartikel mindestens 12 % des Gesamtgewichts der Betonzusammensetzung, optional zwischen 12 % und 15 % des Gesamtgewichts der Betonzusammensetzung, ausmachen.

7. Betonzusammensetzung nach Anspruch 1, wobei das Metakaolin zwischen 8 % und 10 % des Gesamtgewichts der Betonzusammensetzung ausmacht.

8. Betonzusammensetzung nach Anspruch 1, wobei der Portlandzement zwischen 30 % und 38 % des Gesamtgewichts der Betonzusammensetzung ausmacht, der Zuschlagstoff zwischen 16 % und 24 % des Gesamtgewichts der Betonzusammensetzung ausmacht.

9. Betonzusammensetzung nach Anspruch 8, wobei der Portlandzement zwischen 32 % und 36 % des Gesamtgewichts der Betonzusammensetzung ausmacht, der Zuschlagstoff zwischen 19 % und 23 % des Gesamtgewichts der Betonzusammensetzung ausmacht und das Metakaolin zwischen 8 % und 10 % des Gesamtgewichts der Betonzusammensetzung ausmacht.

10. Betonzusammensetzung nach Anspruch 2, ferner umfassend Sand, wobei mindestens 80 % der Glaspartikel eine Korngröße von weniger als 1 mm aufweisen.

11. Betonzusammensetzung nach Anspruch 10, wobei der Portlandzement zwischen 21 % und 25 % des Gesamtgewichts der Betonzusammensetzung ausmacht, der Zuschlagstoff zwischen 18 % und 22 % des Gesamtgewichts der Betonzusammensetzung ausmacht, der Sand zwischen 25 % und 29 % des Gesamtgewichts der Betonzusammensetzung ausmacht, die Glaspartikel zwischen 5 % und 7 % des Gesamtgewichts der Betonzusammensetzung ausmachen und das Metakaolin zwischen 8 % und 10 % des Gesamtgewichts der Betonzusammensetzung ausmacht.

## Revendications

1. Formulation de béton comprenant du ciment Portland, des granulats, des particules de verre, de l'eau et du métakaolin, au moins 80 % des particules de verre ayant une granulométrie inférieure à 4 mm, les particules de verre représentant entre 3 % et 20 % du poids total de la formulation de béton, et le métakaolin représentant entre 6 % et 12 % du poids total de la formulation de béton.

2. Formulation de béton selon la revendication 1, les particules de verre étant des particules de verre expansé.

3. Formulation de béton selon la revendication 1, au moins 80 % des particules de verre ayant une granulométrie inférieure ou égale à 2 mm, éventuellement inférieure ou égale à 1 mm, éventuellement inférieure ou égale à 0,5 mm.

4. Formulation de béton selon l'une quelconque des revendications 1 à 3, au moins 80 % des particules de verre ayant une granulométrie supérieure ou égale à 0,25 mm.

5. Formulation de béton selon la revendication 1, les particules de verre représentant entre 6 % et 15 % du poids total de la formulation de béton.

6. Formulation de béton selon la revendication 1, les particules de verre représentant au moins 12 % du poids total de la formulation de béton, éventuellement entre 12 % et 15 % du poids total de la formulation de béton.

7. Formulation de béton selon la revendication 1, le métakaolin représentant entre 8 % et 10 % du poids total de la formulation de béton.

8. Formulation de béton selon la revendication 1, le ciment Portland représentant entre 30 % et 38 % du poids total de la formulation de béton, les granulats représentant entre 16 % et 24 % du poids total de la formulation de béton.

9. Formulation de béton selon la revendication 8, le ciment Portland représentant entre 32 % et 36 % du poids total de la formulation de béton, les granulats représentant entre 19 % et 23 % du poids total de la formulation de béton, et le métakaolin représentant entre 8 % et 10 % du poids total de la formulation de béton.

10. Formulation de béton selon la revendication 2, comprenant en outre du sable, au moins 80 % des particules de verre ayant une granulométrie inférieure à 1 mm.

11. Formulation de béton selon la revendication 10, le ciment Portland représentant entre 21 % et 25 % du poids total de la formulation de béton, les granulats représentant entre 18 % et 22 % du poids total de la formulation de béton, le sable représentant entre 25 % et 29 % du poids total de la formulation de béton, les particules de verre représentant entre 5 % et 7 % du poids total de la formulation de béton, et le métakaolin représentant entre 6 % et 8 % du poids total de la formulation de béton.
